# EUROPEAN PATENT SPECIFICATION

(11) **EP 1 998 575 B1**
(45) Date of publication and mention of the grant of the patent: **25.05.2016**
(21) Application number: 08153295.4
(22) Date of filing: 26.03.2008
(51) Int. Cl.: H04W 12/12, H04W 88/02, H04L 29/06, G06F 21/53, G06F 21/81, G06F 1/32, G06F 9/455

(54) **Wireless Terminal Apparatus and Method of Protecting System Resources**
Drahtlose Endgerätvorrichtung und Verfahren zum Schützen der Systemressourcen
Appareil de terminal sans fil et procédé de protection de ressources du système

(30) Priority: 02.04.2007 US 907419 P; 24.10.2007 KR 20070107421
(43) Date of publication of application: 03.12.2008
(73) Proprietor: Samsung Electronics Co., Ltd., Suwon-si, Gyeonggi-do, 443-742 (KR)
(72) Inventor: Lee, Sung-Min, Suwon-si Gyeonggi-do (KR); Mo, Sang-Dok, Suwon-si Gyeonggi-do (KR); Jeong, Bok-Deuk, Yong-si Gyeonggi-do (KR)
(74) Representative: Grootscholten, Johannes A.M.

(56) References cited:
- EP-A2- 1 739 524
- US-A1- 2005 223 220
- US-A1- 2007 005 919
- LANDON P COX ET AL: "Pocket Hypervisors: Opportunities and Challenges" MOBILE COMPUTING SYSTEMS AND APPLICATIONS, 2007. HOTMOBILE 2007. EIGHTH IEEE WORKSHOP ON, IEEE, PISCATAWAY, NJ, USA, 1 March 2007 (2007-03-01), pages 46-50, XP031165178 ISBN: 978-0-7695-3001-7

## Description

### BACKGROUND OF THE INVENTION

### 1. Field of the Invention

The present invention relates to a wireless terminal apparatus such as a mobile phone, and more particularly to a wireless terminal apparatus and a method of protecting system resources of the wireless terminal apparatus from malicious software ("malware") attack to guarantee safe security services in a wireless environment.

### 2. Description of the Related Art

Generally, a wireless terminal apparatus, such as a mobile phone, provides diverse information services in a wireless environment.

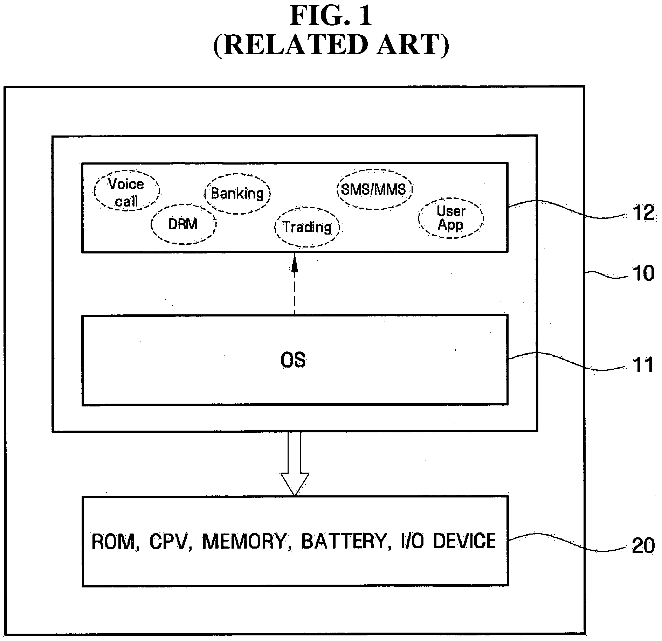

FIG. 1 is a block diagram illustrating the construction of a related art wireless terminal apparatus.

As illustrated in FIG. 1, the related art terminal apparatus includes a domain unit 10 provided with one operating system (OS) 11 and applications 12, and a system resource unit 20 provided with a ROM, a central processing unit (CPU), a memory, a battery, an input/output (I/O) device, and so forth. In the related art terminal apparatus, applications 12 including voice call, banking, trading, digital rights management (DRM), and so forth, are driven by one operating system 11.

According to the related art wireless terminal apparatus as described above, however, all applications 12 are operated by one operating system 11 irrespective of the degree of security, and thus, if malicious software is installed in the wireless terminal apparatus without the user's knowledge in a wireless environment, wireless data information and system resources of the wireless terminal apparatus cannot be protected from malware attack, and safe security services cannot be guaranteed.

More specifically, the malware consumes battery power of the wireless terminal apparatus to make important services unusable. Also, when a received message, such as a Short Message Service (SMS)/Multimedia Messaging Service (MMS) message that includes malware, is executed, the whole system is damaged, hindering the availability of the wireless terminal apparatus.

According to LANDON P COX ET AL: "Pocket Hypervisors: Opportunities and Challenges", MOBILE COMPUTING SYSTEMS AND APPLICATIONS, 2007. HOTMOBILE 2007. EIGHTH IEEE WORKSHOP ON, IEEE, PISCATAWAY, NJ, USA, 1 March 2007 (2007-03-01), pages 46-50, ISBN: 978-0-7695-3001-7 fair use of resources like the battery can be achieved by partitioning resources among the domains so that none of the domains can gain exclusive control of the battery. Also, the document teaches to interrupt the driving of a domain infected by malicious software.

In addition, when operation such as encryption or decryption is performed in a memory of the wireless terminal apparatus, the malware can monitor the contents of the memory before the performance of the encryption or decryption, and thus the user's secret data may flow out.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

An aspect of the present invention provides a wireless terminal apparatus, which includes a domain unit having a first domain driving a first application that is very safe and a second domain separated from the first domain and driving a second application that is weak in safety; a system resource unit composed of hardware of the wireless terminal apparatus; and a control unit controlling an operation of the domain unit that accesses the system resource unit.

Another aspect of the present invention provides a method of protecting system resources for a wireless terminal apparatus, which includes (a) calculating a current amount of battery power used for a second domain, which is separated from a first domain driving an application that requires safety and drives a general application that is weak in safety, and a current remaining amount of battery power of the wireless terminal apparatus; (b) interrupting the driving of the second domain if the current remaining amount of battery power of the wireless terminal apparatus calculated at the step (a) is below a minimum reference value for stably driving an important service; and (c) gradually reducing an amount of CPU usage of the second domain if the current remaining amount of battery power of the wireless terminal apparatus is above the minimum reference value and the current amount of battery power used for the second domain is above a maximum reference value.

### BRIEF DESCRIPTION OF THE DRAWINGS

The above and other features of the present invention will be more apparent from the following detailed description taken in conjunction with the accompanying drawings, in which:
FIG. 1 is a block diagram illustrating the construction of a related art wireless terminal apparatus;
FIG. 2 is a block diagram illustrating the construction of a wireless terminal apparatus according to an exemplary embodiment of the present invention;
FIG. 3 is a flowchart explaining a method of processing malware attack against a battery in a wireless terminal apparatus according to an exemplary embodiment of the present invention;
FIG. 4 is a flowchart explaining a method of performing at least one of encryption and decryption in a wireless terminal apparatus according to an exemplary embodiment of the present invention; and
FIG. 5 is a flowchart explaining a method of performing SMS/MMS data backup in a wireless terminal apparatus according to an exemplary embodiment of the present invention.

### DETAILED DESCRIPTION OF THE EXEMPLARY EMBODIMENTS

Exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

Hereinafter, a wireless terminal apparatus and a method of protecting system resources according to exemplary embodiments of the present invention will be described in detail with reference to the accompanying drawings. In the following description of the present invention, a detailed description of known functions and configurations incorporated herein will be omitted when it may obscure the subject matter of the present invention.

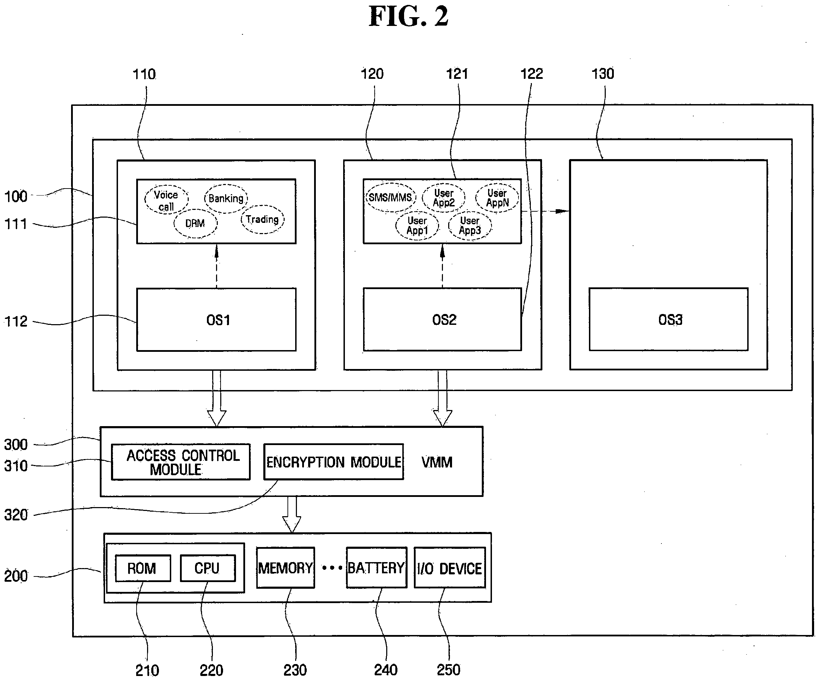

FIG. 2 is a block diagram illustrating the construction of a wireless terminal apparatus according to an exemplary embodiment of the present invention.

As illustrated in FIG. 2, the wireless terminal apparatus according to an exemplary embodiment of the present invention includes a domain unit 100, a system resource unit 200, a control unit 300, and so forth.

The domain unit 100 is an environment in which applications are operated by corresponding operating systems (OS). The domain unit 100 includes first, second, and third domains 110, 120, and 130.

The first domain 110 downloads a first application 111 that requires safety from an authenticated wireless internet server, and installs the downloaded first application 111. The first operating system (OS1) 112 executes the first application 111. The first application 111 includes applications for providing services such as voice call, banking, trading, digital rights management (DRM), and so forth.

The second domain 120 is separated from the first domain 110, and downloads a second application 121, which is somewhat weak in safety and may be attacked by malware, from a general wireless internet server to install the downloaded second application 121. The second operating system (OS2) 122 executes the second application 121. The second application 121 includes applications for providing services such as SMS/MMS, user APP, and so forth.

The third domain 130 is separated from the first and second domains 110 and 120, and makes a backup of important data information of the second domain 120 in order to prevent the important data information from being deleted or changed due to the execution of malware included in the second application 121. In order to minimize the damage to the system when the SMS/MMS including the malware is executed, the third domain 130 only performs the data backup without executing the backup data information.

The system resource unit 200 is composed of hardware of the wireless terminal apparatus. The system resource unit 200 includes a ROM 210, a CPU 220, a memory 230, a battery 240, an input/output (I/O) device 250, and so forth. Here, the ROM 210 is a storage region that cannot be illegally changed by a user or system. The memory 230 is a storage device in which wireless data information is stored, and includes a nonvolatile memory, for example, a flash memory. The memory has a plurality of storage regions in which diverse kinds of wireless data information are dividedly stored according to their kinds and security. Important data information may be encrypted and the encrypted information may be stored in a specified storage region among the storage regions.

The control unit 300 controls the operation of the domain unit 100 using a virtual machine monitor (VMM) so that the domain unit 100 can access the system resource unit 200. In order to protect the system resource unit 200, the control unit 300 is provided with an access control module 310 and an encryption module 320.

The access control module 310 controls the operation of the second domain 120 that accesses the system resource unit 200 in order to react to the malware attack against the system resource unit 200. For example, in the event that the malware included in the second application 121 of the second domain 120 attacks the battery 240 in the system resource unit 200, the access control module 310 interrupts the driving of the second domain 120 if the current remaining amount of battery power of the wireless terminal apparatus is below a minimum reference value for stably driving an important service. On the other hand, the access control module 310 gradually reduces the amount of CPU usage of the second domain 120 if the current remaining amount of battery power of the wireless terminal apparatus is above the minimum reference value and the current amount of battery power used for the second domain 120 is above a maximum reference value. Here, the minimum reference value and the maximum reference value are reference values predefined during the setting of the wireless terminal apparatus.

The encryption module 320 performs encryption and decryption of the important data information being input from the first and second domains 110 and 120 to the system resource unit 200. For example, the encryption module 320 performs encryption, decryption, and electronic signature of the important data information using VMM in the case where the wireless terminal apparatus does not support a hardwired encryption function.

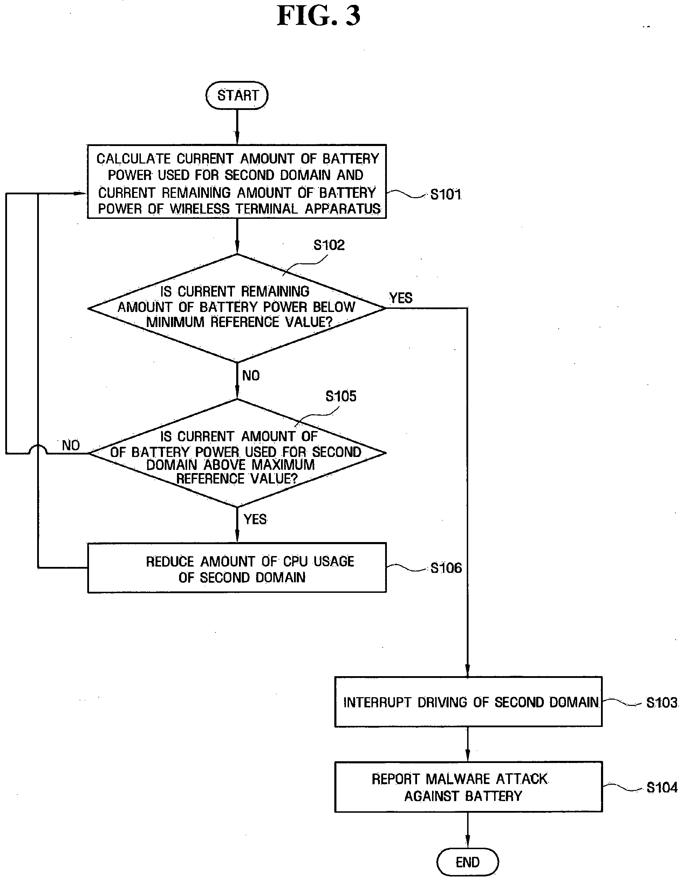

Hereinafter, with reference to FIGS. 3 to 5, the method of protecting the system resources for a wireless terminal apparatus according to an exemplary embodiment of the present invention will be described in detail.

FIG. 3 is a flowchart explaining a method of processing malware attack against a battery in a wireless terminal apparatus according to an exemplary embodiment of the present invention.

As illustrated in FIG. 3, in the case where the battery 240 of the wireless terminal apparatus is attacked by malware, the wireless terminal apparatus according to the present invention guarantees the availability of the battery 240 by managing the corresponding domain.

More specifically, when the malware included in the second application 121 of the second domain 120 attacks the battery 240 of the system resource unit 200, the current amount of battery power used for the second domain 12 and the current remaining amount of battery power of the wireless terminal apparatus are calculated S101. Then, if the current remaining amount of battery power of the wireless terminal apparatus is below the minimum reference value for stably driving the important service S102, the driving of the second domain 120 is interrupted S103, and the malware attack against the battery 240 is reported to the user S104. Then, if the current remaining amount of battery power of the wireless terminal apparatus is above the minimum reference value and the current amount of battery power used for the second domain 120 is above the maximum reference value S105, the amount of CPU usage of the second domain 120 is kept within the maximum reference value S106 by gradually reducing the amount of CPU usage of the second domain 120. Here, the battery consumption is in close relation to the amount of CPU usage.

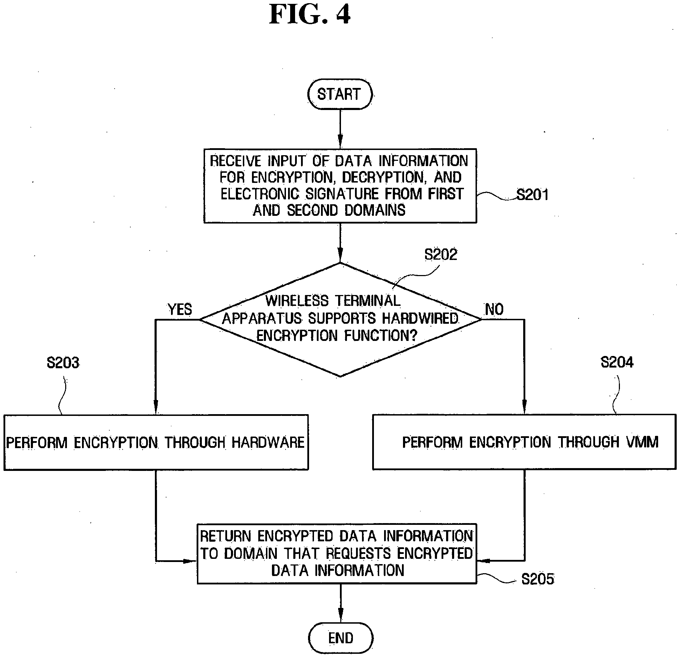

FIG. 4 is a flowchart explaining a method of performing at least one of encryption and decryption in a wireless terminal apparatus according to an exemplary embodiment of the present invention.

As illustrated in FIG. 4, according to the encryption/decryption method for the wireless terminal apparatus according to the present invention, encryption/decryption of the important data information, which is input from the first and second domains 110 and 120 to the system resource unit 200 that is composed of hardware of the wireless terminal apparatus, is performed, and thus, security is improved.

More specifically, data information for encryption, decryption, and electronic signature is input from the first and second domains 110 and 120 S201. Then, it is confirmed whether the wireless terminal apparatus supports hardwired encryption operation of the input data information S202. If the wireless terminal apparatus supports the hardwired encryption operation, the encryption operation is performed through high-speed hardware S203, while if not, a software encryption operation is performed through the control unit 300 using VMM S204. Then, the encrypted data information is returned to the respective domains 110 and 120 requesting the encrypted data information S205.

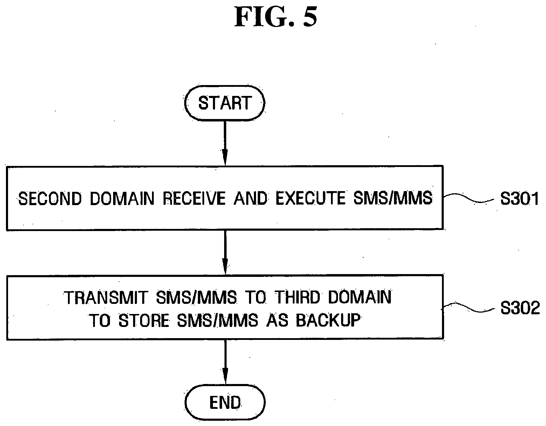

FIG. 5 is a flowchart explaining a method of performing SMS/MMS data backup in a wireless terminal apparatus according to an exemplary embodiment of the present invention.

As illustrated in FIG. 5, according to the exemplary embodiment of the present invention, the SMS/MMS message is stored as a backup in the third domain 130 that is separated from the first and second domains 110 and 120 in order to prevent the SMS/MMS message from being deleted or changed due to the execution of the malware included in the SMS/MMS message.

More specifically, the second domain 120 receives and executes the SMS/MMS message S301, and then transmits the received. SMS/MMS message to the third domain 130, so that the third domain 130 stores the transmitted SMS/MMS message S302. In this case, in order to minimize the damage of the system when the SMS/MMS including the malware is executed and to perform data restoration, the third domain 130 only stores the backup data information without executing the backup data information.

As described above, the wireless terminal apparatus and the method of protecting system resources according to the exemplary embodiments of the present invention have one or more effects as follows.

First, by separating the operating system, in which an application that requires safety and should be protected from malware attack is executed, from general applications that are weak in safety, the security of the wireless terminal apparatus may be improved.

Second, by protecting the system resources of the wireless terminal apparatus from malware attack, for example, by preventing the battery consumption due to the malware attack, the availability of the wireless terminal apparatus may be increased.

Third, by performing encryption/decryption of important data information of the wireless terminal apparatus, security for the important data information may be improved.

Fourth, by performing a backup of the important data information of the operating system in which general applications are executed, the important data information is prevented from being deleted or changed due to the execution of malware included in the general applications.

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A wireless terminal apparatus comprising:
a domain unit (100) having a first domain (110) being configured to drive a first application (111) that requires safety, and a second domain (120), separated from the first domain (110), which drives a second application (121) that is weak in safety;
a system resource unit (200); and
a control unit (300) being configured to control an access operation of the domain unit (100) that accesses the system resource unit (200),
wherein the control unit (300) comprises an access control module (310) being configured to control an operation of the second domain (120) that accesses the system resource unit (200) to react to a malware attack against the system resource unit (200);
**characterized in that**
the access control module (310) being configured to interrupt the driving of the second domain (120) if a current remaining amount of battery power of the wireless terminal apparatus is below a minimum reference value for stably driving a service, said access control module (310) being configured to gradually reduce an amount of central processing unit (CPU) usage of the second domain (120) if the current remaining amount of battery power of the wireless terminal apparatus is above the minimum reference value and a current amount of battery power used for the second domain (120) is above a maximum reference value.

2. The wireless terminal apparatus of claim 1, wherein the first application (111) comprises an application which provides at least one of voice call, banking, trading, and digital rights management DRM services.

3. The wireless terminal apparatus of claim 1 or 2, wherein the second application (121) comprises an application which provides a Short Message Service SMS or Multimedia Messaging Service MMS service.

4. The wireless terminal apparatus of claim 1, 2 or 3, wherein the system resource unit (200) comprises at least one of a memory, a battery, and a central processing unit CPU.

5. The wireless terminal apparatus of any preceding claim, wherein the control unit (300) is configured to control the access operation of the domain unit (100) using a virtual machine monitor (VMM).

6. The wireless terminal apparatus of any preceding claim, wherein the control unit (300) comprises an encryption module (320) being configured to perform at least one of encryption and decryption of data information input to the system resource unit (200).

7. The wireless terminal apparatus of claim 6, wherein the encryption module (320) is configured to perform encryption, decryption, and electronic signature of the data information using a virtual machine monitor (VMM) if the wireless terminal apparatus does not support a hardwired encryption function.

8. The wireless terminal apparatus of any preceding claim further comprising a third domain (130) being configured to perform a backup of data information of the second domain (120) to prevent the data information from being deleted or changed due to an execution of malware included in the second application (121).

9. The wireless terminal apparatus of claim 8, wherein the third domain (130) is configured to only store the backup data information without executing the backup data information.

10. A method of protecting system resources for a wireless terminal apparatus, the method comprising:
(a) calculating a current amount of battery power used for a second domain (120), which is separated from a first domain (110) driving a first application (111) that requires safety, and drives a second application (121) that is weak in safety, and a current remaining amount of battery power of the wireless terminal apparatus;
**characterized by**
(b) interrupting the driving of the second domain (120) if the current remaining amount of battery power of the wireless terminal apparatus calculated at operation (a) is below a minimum reference value for stably driving a service; and
(c) gradually reducing an amount of central processing unit CPU usage of the second domain (120) if the current remaining amount of battery power of the wireless terminal apparatus is above the minimum reference value and the current amount of battery power used for the second domain (120) is above a maximum reference value.

11. The method of claim 10 further comprising (d) performing at least one of encryption decryption of the data information which is input from the first and second domains (110, 120) to a system resource unit (200) of the wireless terminal apparatus.

12. The method of claim 11, wherein operation (d) comprises:
(d1) receiving an input of data information for encryption, decryption, and electronic signature from the first and second domains (110, 120);
(d2) performing an encryption operation of the data information input at operation (d1) if the wireless terminal apparatus supports a hardwired encryption function, while the control unit (300) uses a virtual machine monitor (VMM) performing a software encryption operation if the wireless terminal apparatus does not support the hardwired encryption function; and
(d3) returning the data information encrypted at operation (d2) to the domain requesting the encrypted data information.

13. The method of claim 11 or 12, further comprising (e) the second domain (120) storing as a backup a Short Message Service SMS/Multimedia Messaging Service MMS message in a third domain (130) that is separated from the first and second domains (110, 120) to prevent the SMS/MMS message from being deleted or changed due to an execution of malware included in the SMS/MMS message.

14. The method of claim 13, wherein operation (e) comprises:
(e1) the second domain (120) receiving and executing the SMS/MMS message; and
(e2) transmitting the SMS/MMS message to the third domain (130) to store the SMS/MMS message in the third domain (130).

## Patentansprüche

1. Drahtlose Endgerätevorrichtung, die umfasst:
eine Domaineinheit (100), die umfasst: eine erste Domain (110), die dazu konfiguriert ist eine erste Anwendung (111), welche Sicherheit erfordert, anzutreiben, sowie eine zweite Domain (120), die von der ersten Domain (110) getrennt ist und die eine zweite Anwendung (121) mit niedriger Sicherheit antreibt;
eine Systemressourceneinheit (200); und
eine Steuerungseinheit (300), die dazu konfiguriert ist, eine Zugriffsoperation der Domaineinheit (100), die auf die Systemressourceneinheit (200) zugreift, zu steuern,
wobei die Steuerungseinheit (300) ein Modul (310) zur Zugriffssteuerung umfasst, welches dazu konfiguriert ist, eine Operation der zweiten Domain (120), die auf die Systemressourceneinheit (200) zugreift, zu steuern, um auf einen Malware-Angriff gegen die Systemressourceneinheit (200) zu reagieren;
**dadurch gekennzeichnet, dass**
das Modul (310) zur Zugriffssteuerung dazu konfiguriert ist, den Antrieb der zweiten Domain (120) zu unterbrechen, wenn eine aktuell verbleibende Menge an Batterieladung der drahtlosen Endgerätevorrichtung unterhalb eines minimalen Referenzwerts zum stabilen Antreiben eines Dienstes liegt, wobei das Modul (310) zur Zugriffssteuerung dazu konfiguriert ist, eine Menge des Verbrauchs der Zentraleinheit (Central Processing Unit, CPU) der zweiten Domain (120) nach und nach zu verringern, wenn die aktuell verbleibende Menge an Batterieladung der drahtlosen Endgerätevorrichtung oberhalb des minimalen Referenzwerts liegt und eine aktuelle Menge an Batterieladung, die für die zweite Domain (120) verbraucht wird, oberhalb eines minimalen Referenzwerts liegt.

2. Drahtlose Endgerätevorrichtung gemäß Anspruch 1, wobei die erste Anwendung (111) eine Anwendung umfasst, die die folgenden Dienste zur Verfügung stellt: Sprachanruf, Banking, Handel und/oder digitale Rechteverwaltung (Digital Rights Management, DRM).

3. Drahtlose Endgerätevorrichtung gemäß Anspruch 1 oder 2, wobei die zweite Anwendung (121) eine Anwendung umfasst, die einen Kurznachrichtendienst (Short Message Service, SMS) oder einen Multimedianachrichtendienst (Multimedia Messaging Service, MMS) zur Verfügung stellt.

4. Drahtlose Endgerätevorrichtung gemäß Anspruch 1, 2 oder 3, wobei die Systemressourceneinheit (200) einen Speicher, eine Batterie und/oder eine Zentraleinheit (CPU) umfasst.

5. Drahtlose Endgerätevorrichtung gemäß einem der vorangegangenen Ansprüche, wobei die Steuerungseinheit (300) dazu konfiguriert ist, die Zugriffsoperation der Domaineinheit (100) mit Hilfe eines Hypervisors (Virtual Machine Monitor, VMM) zu steuern.

6. Drahtlose Endgerätevorrichtung gemäß einem der vorangegangenen Ansprüche, wobei die Steuerungseinheit (300) ein Verschlüsselungsmodul (320) umfasst, welches dazu konfiguriert ist, Dateninformationen, die in die Systemressourceneinheit (200) eingegeben wurden, zu verschlüsseln und/oder zu entschlüsseln.

7. Drahtlose Endgerätevorrichtung gemäß Anspruch 6, wobei das Verschlüsselungsmodul (320) dazu konfiguriert ist, eine Verschlüsselung, eine Entschlüsselung und eine elektronische Signatur der Dateninformationen mit Hilfe eines Hypervisors (VMM) durchzuführen, wenn die drahtlose Endgerätevorrichtung keine fest verdrahtete Verschlüsselungsfunktion unterstützt.

8. Drahtlose Endgerätevorrichtung gemäß einem der vorangegangenen Ansprüche, weiterhin umfassend eine dritte Domain (130), die dazu konfiguriert ist, eine Sicherung von Dateninformationen von der zweiten Domain (120) durchzuführen, um zu verhindern, dass die Dateninformationen gelöscht oder geändert werden wegen einer Ausführung von Malware, die in der zweiten Anwendung (121) enthalten war.

9. Drahtlose Endgerätevorrichtung gemäß Anspruch 8, wobei die dritte Domain (130) dazu konfiguriert ist, die Sicherangsdateninformationen nur zu speichern, ohne die Sicherungsdateninformationen auszuführen.

10. Verfahren zum Schutz von Systemressourcen für eine drahtlose Endgerätevorrichtung, wobei das Verfahren umfasst:
(a) Berechnen einer aktuellen Menge an Batterieladung, die für eine zweite Domain (120) verbraucht wird, wobei die zweite Domain von einer ersten Domain (110), die eine erste Anwendung (111), die Sicherheit erfordert, antreibt, getrennt ist und eine zweite Anwendung (121) mit niedriger Sicherheit antreibt, und Berechnen einer aktuell verbleibende Menge an Batterieladung der drahtlosen Endgerätevorrichtung;
**gekennzeichnet durch**
(b) Unterbrechen des Antriebs der zweiten Domain (120), wenn die aktuell verbleibende Menge an Batterieladung der drahtlosen Endgerätevorrichtung, welche in Operation (a) berechnet wurde, unterhalb eines minimalen Referenzwerts zum stabilen Antreiben eines Dienstes liegt; und
(c) Nach und nach Reduzieren einer Menge des Verbrauchs der Zentraleinheit (CPU) der zweiten Domain (120), wenn die aktuell verbleibende Menge an Batterieladung der drahtlosen Endgerätevorrichtung oberhalb des minimalen Referenzwerts liegt und die aktuell verbleibende Menge an Batterieladung, die für die zweite Domain (120) verbraucht wird, oberhalb eines minimalen Referenzwerts liegt.

11. Verfahren gemäß Anspruch 10, weiterhin umfassend (d) das Durchführen einer Verschlüsselung und/oder Entschlüsselung von Dateninformationen, die von der ersten und von der zweiten Domain (110, 120) in eine Systemressourceneinheit (200) der drahtlosen Endgerätevorrichtung eingegeben wurden.

12. Verfahren gemäß Anspruch 11, wobei die Operation (d) umfasst:
(d1) Empfangen einer Eingabe von Dateninformationen zur Verschlüsselung, zur Entschlüsselung und zur elektronischen Signatur von der ersten und von der zweiten Domain (110, 120);
(d2) Durchführen einer Verschlüsselungsoperation an den Dateninformationen, die in Operation (d1) eingegeben wurden, wenn die drahtlose Endgerätevorrichtung eine fest verdrahtete Verschlüsselungsfunktion unterstützt, während die Steuerungseinheit (300) mit Hilfe eines Hypervisors (VMM) eine Softwareverschlüsselungsoperation durchführt, wenn die drahtlose Endgerätevorrichtung keine fest verdrahtete Verschlüsselungsfunktion unterstützt; und
(d3) Zurückgeben der in Operation (d2) verschlüsselten Dateninformationen an die Domain, welche die verschlüsselten Dateninformationen angefordert hat.

13. Verfahren gemäß Anspruch 11 oder 12, weiterhin umfassend, dass (e) die zweite Domain (120) einen Kurznachrichtendienst (SMS) oder einen Multimedianachrichtendienst (MMS) als Sicherung in einer dritten Domain (130), die von der ersten und von der zweiten Domain (110, 120) getrennt ist, speichert, um zu verhindern, dass die SMS- oder MMS-Nachricht gelöscht oder geändert wird wegen einer Ausführung von Malware, die in der SMS oder MMS enthalten war.

14. Verfahren gemäß Anspruch 13, wobei die Operation (e) umfasst:
(e1) dass die zweite Domain (120) die SMS- oder MMS-Nachricht empfängt und ausführt; und
(e2) die SMS- oder MMS-Nachricht an die dritte Domain (130) überträgt, um die SMS- oder MMS-Nachricht in der dritten Domain (130) zu speichern.

## Revendications

1. Appareil terminal sans fil comprenant :
une unité à domaines (100) présentant un premier domaine (110) configuré pour piloter une première application (111) nécessitant de la sécurité, et un deuxième domaine (120), distinct du premier domaine (110), qui pilote une seconde application (121) à moindre sécurité ;
une unité de ressources système (200) ; et
une unité de commande (300) configurée pour commander une opération d'accès de l'unité à domaines (100) qui accède à l'unité de ressources système (200),
dans lequel l'unité de commande (300) comprend un module de commande d'accès (310) configuré pour commander le fonctionnement du deuxième domaine (120) qui accède à l'unité de ressources système (200) pour réagir à une attaque par programme malveillant à l'encontre de l'unité de ressources système (200) ;
**caractérisé en ce que**
le module de commande d'accès (310) est configuré pour interrompre le pilotage du deuxième domaine (120) si une quantité restante actuelle d'énergie de batterie de l'appareil terminal sans fil est inférieure à une valeur de référence minimale permettant le pilotage d'un service de manière stable, ledit module de commande d'accès (310) étant configuré pour réduire progressivement la quantité d'usage d'unité centrale du deuxième domaine (120) si la quantité restante actuelle d'énergie de batterie de l'appareil terminal sans fil est supérieure à la valeur de référence minimale et que la quantité actuelle d'énergie de batterie servant au deuxième domaine (120) est supérieure à une valeur de référence maximale.

2. Appareil terminal sans fil selon la revendication 1, dans lequel la première application (111) comprend une application qui fournit des services d'appel vocal, bancaires, commerciaux et/ou de gestion des droits numériques.

3. Appareil terminal sans fil selon la revendication 1 ou 2, dans lequel la seconde application (121) comprend une application fournissant un service de minimessages (SMS - Short Message Service) ou un service de messages multimédias (MMS - Multimedia Messaging Service).

4. Appareil terminal sans fil selon la revendication 1, 2 ou 3, dans lequel l'unité de ressources système (200) comprend une mémoire, une batterie et/ou une unité centrale.

5. Appareil terminal sans fil selon l'une quelconque des revendications précédentes, dans lequel l'unité de commande (300) est configurée pour commander l'opération d'accès de l'unité à domaines (100) au moyen d'un gestionnaire de machine virtuelle.

6. Appareil terminal sans fil selon l'une quelconque des revendications précédentes, dans lequel l'unité de commande (300) comprend un module de chiffrement (320) configuré pour réaliser un chiffrement et/ou un déchiffrement d'informations de données introduites dans l'unité de ressources système (200).

7. Appareil terminal sans fil selon la revendication 6, dans lequel le module de chiffrement (320) est configuré pour réaliser un chiffrement, un déchiffrement et une signature électronique des informations de données au moyen d'un gestionnaire de machine virtuelle si l'appareil terminal sans fil ne prend pas en charge une fonction de chiffrement câblé.

8. Appareil terminal sans fil selon l'une quelconque des revendications précédentes, comprenant en outre un troisième domaine (130) configuré pour réaliser une sauvegarde des informations de données du deuxième domaine (120) pour empêcher les informations de données d'être effacées ou modifiées du fait de l'exécution du programme malveillant inclus dans la seconde application (121).

9. Appareil terminal sans fil selon la revendication 8, dans lequel le troisième domaine (130) est configuré pour stocker uniquement les informations de données de sauvegarde sans exécuter les informations de données de sauvegarde.

10. Procédé de protection de ressources système pour l'appareil terminal sans fil, le procédé comprenant :
(a) le calcul d'une quantité actuelle d'énergie de batterie servant à un deuxième domaine (120), qui est distinct d'un premier domaine (110) pilotant une première application (111) nécessitant de la sécurité, et pilote une seconde application (121) à moindre sécurité, et le calcul d'une quantité restante actuelle d'énergie de batterie de l'appareil terminal sans fil ;
**caractérisé par**
(b) l'interruption du pilotage du deuxième domaine (120) si la quantité restante actuelle d'énergie de batterie de l'appareil terminal sans fil calculée lors de l'opération (a) est inférieure à une valeur de référence minimale permettant le pilotage d'un service de manière stable ; et
(c) la réduction progressive de la quantité d'usage d'unité centrale du deuxième domaine (120) si la quantité restante actuelle d'énergie de batterie de l'appareil terminal sans fil est supérieure à la valeur de référence minimale et que la quantité actuelle d'énergie de batterie servant au deuxième domaine (120) est supérieure à une valeur de référence maximale.

11. Procédé selon la revendication 10 comprenant en outre (d) la réalisation du chiffrement et/ou du déchiffrement des informations de données qui sont introduites, en provenance des premier et deuxième domaines (110, 120), dans une unité de ressources système (200) de l'appareil terminal sans fil.

12. Procédé selon la revendication 11, dans lequel l'opération (d) comprend :
(d1) la réception d'une introduction des informations de données pour le chiffrement, le déchiffrement et la signature électronique en provenance des premier et deuxième domaines (110, 120) ;
(d2) la réalisation d'une opération de chiffrement des informations de données introduites lors de l'opération (d1) si l'appareil terminal sans fil prend en charge une fonction de chiffrement câblé, tandis que l'unité de commande (300) utilise un gestionnaire de machine virtuelle qui réalise une opération de chiffrement logicielle si l'appareil terminal sans fil ne prend pas en charge la fonction de chiffrement câblé ; et
(d3) le retour des informations de données chiffrées lors de l'opération (d2) vers le domaine demandant les informations de données chiffrées.

13. Procédé selon la revendication 11 ou 12, comprenant en outre (e) le stockage en sauvegarde, par le deuxième domaine (120), d'un message SMS ou MMS dans un troisième domaine (130) distinct des premier et deuxième domaines (110, 120) afin d'empêcher la suppression ou la modification du message SMS/MMS du fait de l'exécution d'un programme malveillant inclus dans le message SMS/MMS.

14. Procédé selon la revendication 13, dans lequel l'opération (e) comprend :
(e1) la réception et l'exécution, par le deuxième domaine (120), du message SMS/MMS ; et
(e2) la transmission du message SMS/MMS vers le troisième domaine (130) pour stocker le message SMS/MMS dans le troisième domaine (130).
